# EUROPÄISCHE PATENTSCHRIFT

(11) **EP 3 493 707 B1**
(45) Veröffentlichungstag und Bekanntmachung des Hinweises auf die Patenterteilung: **16.09.2020**
(21) Anmeldenummer: 17754629.8
(22) Anmeldetag: 31.07.2017
(51) Int. Cl.: A47F 3/04, G01V 8/20, G06Q 10/08, A47F 10/02

(54) **VERKAUFSKÜHLMÖBEL.**
REFRIGERATED VENDING CABINET
MEUBLE DE VENTE RÉFRIGÉRÉ

(30) Priorität: 03.08.2016 DE 102016114336
(43) Veröffentlichungstag der Anmeldung: 12.06.2019
(73) Patentinhaber: AHT Cooling Systems GmbH, 8786 Rottenmann (AT)
(72) Erfinder: RESCH, Reinhold, 8755 St. Peter (AT)
(74) Vertreter: Fleck, Hermann-Josef
(86) Internationale Anmeldenummer: PCT/EP2017/069317
(87) Internationale Veröffentlichungsnummer: WO 2018/024673

(56) Entgegenhaltungen:
- EP-A1- 3 017 725
- US-A1- 2007 150 381
- US-A1- 2014 252 091
- US-A1- 2014 316 916
- US-B1- 6 259 965

## Beschreibung

Die Erfindung bezieht sich auf ein Kühlmöbel, wie Kühltheke, Kühltruhe oder Kühlregal, mit einem der Aufnahme von Waren dienenden, von einer Bodengruppe, einer Frontgruppe und einer Rückseitengruppe umgebenen Kühlraum und einer Stapelmarkierungsvorrichtung zur Erfassung einer einzuhaltenden Stapelhöhe der Waren in einem vorgegebenen Abstand von einer Bodenplattenform die der einzuhaltenden Stapelhöhe entspricht.

Ein Kühlmöbel dieser Art ist in der AT 509 937 A2 gezeigt, eine weitere z. B. in der DE 20 2016 000 889 U1. Um sicherzustellen, dass die ausgelegten Waren ausreichend gekühlt werden, um sie frisch zu halten, sind in dem Kühlraum in der Regel Anhaltspunkte bzw. Markierungen vorhanden oder angebracht, anhand deren das Bedienpersonal überwachen kann, dass eine einzuhaltende Stapelhöhe nicht überschritten wird. Jedoch ist eine derartige Kontrolle nicht immer sicher gewährleistet, insbesondere wenn es sich beispielsweise um Selbstbedienungstheken handelt.

In der EP 3 017 725 A1 ist ein Kühlmöbel mit einer Sensorvorrichtung zum Erfassen von auf Auslegeböden angeordneten Waren und zur Überwachung der Beladungsniveaus gezeigt.

Die US 2014/0316916 A1 zeigt ein Verkaufsregal unter anderem für gefrorene Nahrungsmittel, das mit einem Lichtdetektorsystem für in verschiedenen Regalabteilen vorhandene Waren versehen ist.

In der US 2014/0252091 A1 ist eine optische Mustererkennungsvorrichtung in einem Kühlschrank angeordnet, um darin vorhandene Waren zu erfassen.

Die US 2007/0150381 A1 offenbart eine Erkennungsvorrichtung für Waren in einem Kühlschrank mittels einer Transpondervorrichtung.

In der US 6 259 965 B1 ist ein optischen Überwachungssystem für die Entnahme und gegebenenfalls ein Zurücklegen von Waren angegeben.

Der Erfindung liegt die Aufgabe zugrunde, ein Kühlmöbel der eingangs genannten Art bereitzustellen, bei der eine einzuhaltende Stapelhöhe zuverlässig überwacht wird.

Diese Aufgabe wird mit den Merkmalen des Anspruchs 1 gelöst. Hierbei ist vorgesehen, dass die Stapelmarkierungsvorrichtung als eine auf Basis elektromagnetischer Strahlen, insbesondere IR-Strahlung, arbeitende Überwachungseinrichtung ausgebildet ist, welche eine die Strahlen aussendende Senderanordnung, eine die Strahlen aufnehmende Empfängeranordnung und eine deren Ausgangsignale verarbeitende Auswerteeinrichtung aufweist.

Mit diesen Maßnahmen wird automatisch festgestellt, wenn eine einzuhaltende Stapelhöhe zu kühlender Waren im Kühlraum überschritten wird. Die Anwendung kann vorteilhaft in Kühlmöbeln, wie Kühltheken oder Kühltruhen erfolgen, aber auch z. B. in Kühlregalen oder Kühlinseln.

Zu einer zuverlässigen Überwachung tragen dabei die Maßnahmen bei, dass die Strahlen beim Betrieb gitterartig oder fächerartig in zumindest einer - vorzugsweise horizontalen - Ebene verlaufend angeordnet sind.

Die weiteren Maßnahmen, dass die Senderanordnung mehrere Sender und / oder die Empfängeranordnung mehrere Empfänger aufweist ergeben eine vorteilhafte Ausbildung für eine möglichst genaue Überwachung.

Dabei ist vorteilhaft für den Aufbau und die Funktion vorgesehen, dass einander zugeordnete Sender und Empfänger auf verschiedenen Seiten des Kühlraums angeordnet sind oder auf derselben Seite angeordnet sind und die Strahlen zwischen Sender und Empfänger mittels einer Reflektoranordnung umgelenkt werden. Einander zugeordnete Sender und Empfänger können dabei auf sich gegenüberliegenden Seiten, beispielsweise in den zur Vorderseite und Rückseite rechtwinklig verlaufenden Seitenbereichen in Tiefenrichtung angeordnet sein oder entlang der in Längsrichtung verlaufenden Vorderseite und / oder Rückseite oder aber alternativ oder zusätzlich entlang aller vier Seiten oder auch nur einer Seite, wobei sich die Strahlen durch die Reflektoranordnung entsprechend vom Sender zu dem oder den zugeordneten Empfängern umleiten lassen.

Ein vorteilhafter Aufbau ergibt sich dadurch, dass die Senderanordnung und die Empfängeranordnung, gegebenenfalls mit ihrer elektrischen Kontaktierung und Verkabelung, in einer oder mehreren Leisten angeordnet sind.

Vorteilhafte differenziertere Auswertemöglichkeiten werden dadurch erhalten, dass die Auswerteeinrichtung zum Erkennen einer durch einen Eingriff in den Kühlraum bedingten zeitlichen und/oder durch einen Fremdgegenstand, wie Preisschild, in dem Kühlraum bedingte relativ geringfügigen örtlichen Beeinflussung der Ausgangssignale eine Detektoreinrichtung aufweist.

In der Auswerteeinrichtung kann durch entsprechende Signalauswertung z. B. unterschieden werden, ob eine Bedienperson vorübergehend in den Kühlraum eingreift um eine Ware zu entnehmen, wobei eine betreffende zeitliche Auswertung, z. B. über ein voreingestelltes Zeitintervall, erfolgen kann. Zusätzlich oder alternativ kann auch ein gegenüber den zu kühlenden Waren fremder Gegenstand bei der Signalisierung der Stapelhöhe unberücksichtigt bleiben, indem z. B. eine gewisse Unschärfe in der Signalstärke der Ausgangssignale zugelassen wird beziehungsweise einstellbar ist, so dass z. B. gesteckte Preisschilder nicht in die Beurteilung der Stapelhöhe einfließen beziehungsweise von der Überwachung "übersehen" werden. Auch statistische zeitliche und / oder örtliche Auswertemethoden können vorgesehen sein. Die Einhaltung der Stapelhöhe lässt sich von dem Bedienpersonal leicht feststellen, wenn vorgesehen ist, dass die Überwachungseinrichtung eine elektrisch gesteuerte optische und / oder akustische Anzeigevorrichtung aufweist.

Weitere vorteilhafte Ausgestaltungsvarianten bestehen darin, dass die Auswerteeinrichtung in einer Steuereinrichtung des Kühlmöbels oder außerhalb derselben angeordnet ist. Insbesondere bei separater Ausbildung bzw. Anordnung der Auswerteeinrichtung wird eine Nachrüstung ermöglicht bzw. vereinfacht.

Die Erfindung wird nachfolgend anhand von Ausführungsbeispielen unter Bezugnahme auf die Zeichnungen näher erläutert. Es zeigen:
- Fig. 1: ein Kühlmöbel in Form einer Kühltheke (hier ausgeführt als Bedientheke) in perspektivischer Ansicht von schräg vorn oben mit angedeuteter Stapelmarkierungsvorrichtung,
- Fig. 2: die Kühltheke nach Fig. 1 in perspektivischer seitlicher Ansicht mit Darstellung von Strahlenverläufen,

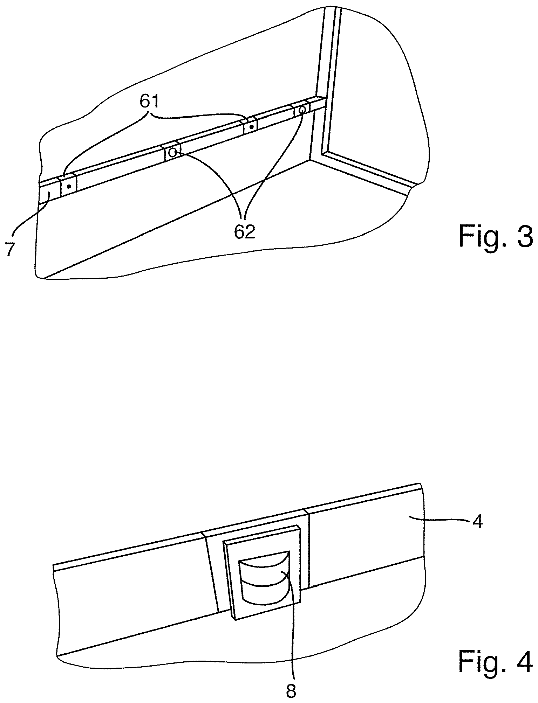

- Fig. 3: einen Ausschnitt eines Kühlmöbels mit Stapelmarkierungsvorrichtung sowie Sendern und Empfängern und
- Fig. 4: einen Ausschnitt des Kühlmöbels mit einer Anzeigevorrichtung der Stapelmarkierungsvorrichtung.

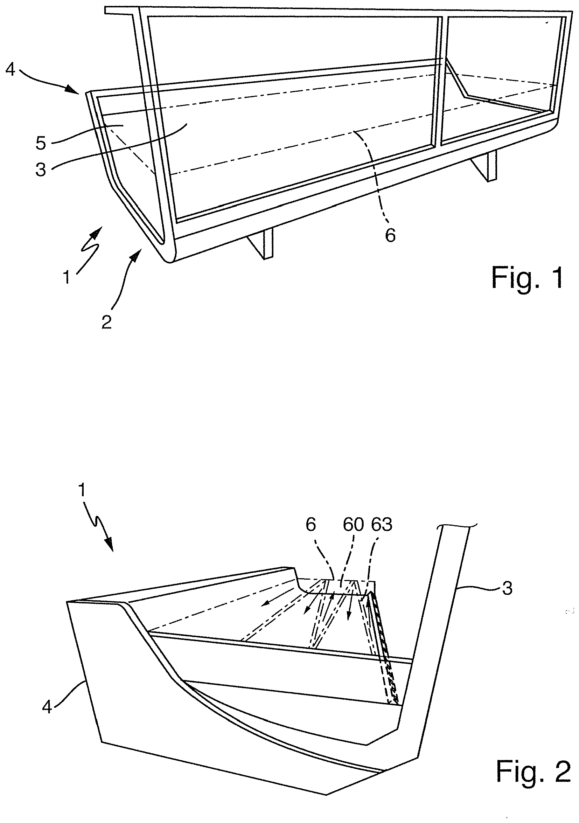

Fig. 1 zeigt als bevorzugtes Ausführungsbeispiel eines Kühlmöbels eine Kühltheke 1, und zwar vorliegend einer Bedientheke für Thekenpersonal. Auch bei Selbstbedientheken lässt sich die Erfindung vorteilhaft anwenden. Als weiteres Ausführungsbeispiel für ein Kühlmöbel mit Stapelmarkierungsvorrichtung kommt eine Kühltruhe in Betracht und auch eine Anordnung in einem Kühlregal oder einer Kühlinsel ist möglich.

Bei der Kühltheke 1 nach Fig. 1 ist in einem gewissen Abstand von einer einen Kühlraum 5 nach unten begrenzenden Kühlplattform einer Bodengruppe 2 zur Aufnahme und Kühlung von zu kühlenden Waren eine Stapelmarkierungsvorrichtung 6 vorgesehen. Auf der den Kunden zuzuwendenden Vorderseite der Kühltheke 1 ist an der Bodengruppe 2 eine Frontgruppe 3 und auf der dem Bedienpersonal zuzukehrenden Rückseite eine Rückseitengruppe 4 angeordnet.

Die Stapelmarkierungsvorrichtung 6 weist eine Überwachungseinrichtung 60 zur elektronischen Überwachung einer einzuhaltenden, nicht zu überschreitenden maximalen Stapelhöhe beziehungsweise Füllstandshöhe auf, die auf der Basis elektromagnetischer Strahlen, insbesondere im nicht sichtbaren Infrarotbereich des elektromagnetischen Spektrums arbeitet.

Fig. 2 zeigt beispielhaft einige Strahlenverläufe der Strahlen 63, die von ebenfalls zur Überwachungseinrichtung 60 gehörenden Sendern einer Senderanordnung 61 ausgesendet und von Empfängern einer Empfängeranordnung 62 empfangen werden. Die Sender und Empfänger sind in einer an den Kühlmöbel beziehungsweise der Kühltheke 1 montierten Markierungsträgeranordnung 7 integriert, die als Trägerelemente Leisten 70, beispielsweise Edelstahlleisten oder Kunststoffleisten, aufweist. Sender und zugeordnete Empfänger können auf sich gegenüberliegenden Seiten der Kühltheke 1, beispielsweise entlang der beiden in Tiefenrichtung gerichteten Seiten oder entlang der in Längsrichtung verlaufenden Vorderseite beziehungsweise Rückseite angeordnet sein, so dass die Empfänger direkt von den Sendern ausgesandte Strahlen 63 empfangen können, oder die von den Sendern 61 ausgesandten Strahlen 63 können über eine Reflektoranordnung umgelenkt und auf zugeordnete Empfänger gerichtet werden. Es ist nicht unbedingt eine eins zu eins Zuordnung von Sender und Empfänger erforderlich. Einem Empfänger können beispielsweise auch mehrere Sender und / oder mehreren Empfänger kann auch nur ein Sender zugeordnet sein.

Um die Stapelhöhe zuverlässig zu erfassen, sind in einem vorgegebenen Abstand zur Bodenplattform, der der einzuhaltenden Stapelhöhe entspricht, die Strahlen 63 im Muster eines Lichtgitters oder Fächers in einer der Stapelhöhe entsprechenden Ebene geführt, so dass auch einzelne, über die einzuhaltende Stapelhöhe hinausreichende zu kühlende Waren festgestellt und signalisiert werden können.

Die Überwachungseinrichtung 60 weist eine Auswerteeinrichtung für von der Empfängeranordnung 62 abgegebene Ausgangssignale auf, die zusammen mit einer Ansteuerungsschaltung für die Stapelmarkierungsvorrichtung z. B. in einer Steuereinrichtung der Kühltheke 1 bzw. des Kühlmöbels oder separat von dieser (und damit leicht nachrüstbar) angeordnet ist. Mit einem elektronischen Schaltkreis beziehungsweise unter Einbeziehung z. B. einer Rechnerschaltung wird eine Detektoreinrichtung gebildet, mit der z. B. eine Beeinflussung der Strahlen 63 und damit verbunden auch der Ausgangssignale durch Eingriffe des Bedienpersonals in den Kühlraum 5 festgestellt und von der Signalisierung der Überwachung der Stapelhöhe ausgenommen werden können. Dies kann beispielsweise durch Voreinstellen eines gewissen Zeitintervals erfolgen, welches an eine übliche Dauer derartiger Eingriffe angepasst ist, so dass nur entsprechend längere Änderungen der Ausgangssignale, die demnach auf eine Überschreitung der einzuhaltenden Stapelhöhe hindeuten, für die Signalisierung erfasst werden. Weiterhin kann auch z. B. eine gewisse Unschärfe in der zu erfassenden Stärke der Ausgangssignale eingestellt werden beziehungsweise einstellbar sein, so dass eine länger anhaltende statische Änderung, die durch gegenüber den zu kühlenden Waren fremde Gegenstände erfolgt, wie z. B. gesteckte Preisschilder, von der Signalisierung ausgenommen beziehungsweise von der Überwachung übersehen werden.

Zur Kenntlichmachung einer unzulässigen Überschreitung der einzuhaltenden Stapelhöhe weist die Überwachungseinrichtung 60 eine optische und / oder akustische Anzeigevorrichtung 8 auf, die z. B. auf einer insbesondere von Bedienpersonal gut einsehbaren Seite des Kühlmöbels angeordnet ist.

## Patentansprüche

1. Kühlmöbel, wie Kühltheke oder Kühltruhe, mit einem der Aufnahme von Waren dienenden, von einer Bodengruppe (2), einer Frontgruppe (3) und einer Rückseitengruppe umgebenen Kühlraum (5) und einer Stapelmarkierungsvorrichtung (6) zur Erfassung einer einzuhaltenden Stapelhöhe der Waren in einem vorgegebenen Abstand von einer Bodenplattform, der der einzuhaltenden Stapelhöhe entspricht, wobei die Stapelmarkierungsvorrichtung (6) als eine auf Basis elektromagnetischer Strahlen (63), insbesondere IR-Strahlung, arbeitende Überwachungseinrichtung (60) ausgebildet ist, welche eine die Strahlen (63) aussendende Senderanordnung (61), eine die Strahlen (63) aufnehmende Empfängeranordnung (62) und eine deren Ausgangsignale verarbeitende Auswerteeinrichtung aufweist, wobei die Strahlen (63) beim Betrieb gitterartig oder fächerartig in zumindest einer der Stapelhöhe entsprechenden - vorzugsweise horizontalen - Ebene verlaufend geführt sind, wobei die Senderanordnung (61) mehrere Sender und / oder die Empfängeranordnung (62) mehrere Empfänger aufweist, wobei einander zugeordnete Sender und Empfänger auf verschiedenen Seiten des Kühlraums (5) angeordnet sind oder auf derselben Seite angeordnet sind und die Strahlen (63) zwischen Sender und Empfänger mittels einer Reflektoranordnung umgelenkt werden.

2. Kühlmöbel nach einem der vorhergehenden Ansprüche,
**dadurch gekennzeichnet,**
**dass** die Senderanordnung (61) und die Empfängeranordnung (62), gegebenenfalls mit ihrer elektrischen Kontaktierung und Verkabelung, in einer oder mehreren Leisten (70) angeordnet sind.

3. Kühlmöbel nach einem der vorhergehenden Ansprüche,
**dadurch gekennzeichnet,**
**dass** die Auswerteeinrichtung zum Erkennen einer durch einen Eingriff in den Kühlraum (5) bedingte zeitliche und / oder durch einen Fremdgegenstand, wie Preisschild, in dem Kühlraum (5) bedingte relativ geringfügige Beeinflussung der Ausgangssignale eine Detektoreinrichtung aufweist.

4. Kühlmöbel nach einem der vorhergehenden Ansprüche,
**dadurch gekennzeichnet,**
**dass** die Überwachungseinrichtung (60) eine elektrisch gesteuerte optische und / oder akustische Anzeigevorrichtung aufweist.

5. Kühlmöbel nach einem der vorhergehenden Ansprüche,
**dadurch gekennzeichnet,**
**dass** die Auswerteeinrichtung in einer Steuereinrichtung des Kühlmöbels oder außerhalb derselben angeordnet ist.

## Claims

1. Refrigeration unit, such as a refrigerated display case or freezer, comprising a refrigeration space (5) which is used to hold goods and is surrounded by a floor group (2), a front group (3) and a rear group, and a stack marking device (6) for detecting a stack height to be maintained of the goods at a predetermined distance from a floor platform which corresponds to the stack height to be maintained, wherein the stack marking device (6) is designed as a monitoring apparatus (60) which operates on the basis of electromagnetic beams (63), in particular IR radiation, and which has a transmitter arrangement (61) which emits the beams (63), a receiver arrangement (62) which receives the beams (63) and an evaluation apparatus which processes the output signals of said receiver arrangement, wherein the beams (63) are guided during operation in a grid-like or fan-like manner in at least one preferably horizontal plane corresponding to the stack height, wherein the transmitter arrangement (61) has a plurality of transmitters and/or the receiver arrangement (62) has a plurality of receivers, wherein mutually assigned transmitters and receivers are arranged on different sides of the refrigeration space (5) or are arranged on the same side and the beams (63) are deflected between the transmitters and receivers by means of a reflector arrangement.

2. Refrigeration unit according to one of the preceding claims, **characterized in that** the transmitter arrangement (61) and the receiver arrangement (62), optionally with their electrical contacting and wiring, are arranged in one or more strips (70).

3. Refrigeration unit according to either of the preceding claims, **characterized in that** the evaluation apparatus comprises a detector device for identifying a relatively slight influence on the output signals caused by an intervention in the refrigeration space (5) and/or by a foreign object, such as a price tag, in the refrigeration space (5).

4. Refrigeration unit according to any of the preceding claims, **characterized in that** the monitoring apparatus (60) has an electrically controlled optical and/or acoustic display device.

5. Refrigeration unit according to any of the preceding claims, **characterized in that** the evaluation apparatus is arranged in a control device of the refrigeration unit or outside same.

## Revendications

1. Meuble frigorifique, tel qu'un comptoir frigorifique ou un congélateur bahut, comportant une chambre frigorifique (5) qui sert à recevoir des produits et qui est entourée d'un groupe formant le fond (2), d'un groupe formant l'avant (3) et d'un groupe formant l'arrière, et comportant un dispositif de repérage d'empilage (6) permettant de détecter une hauteur d'empilage des produits à respecter à une distance prédéfinie d'une plate-forme formant le fond, laquelle distance correspond à la hauteur d'empilage à respecter, le dispositif de repérage d'empilage (6) est réalisé sous la forme d'un dispositif de surveillance (60) fonctionnant sur la base de rayons électromagnétiques (63), en particulier d'un rayonnement IR, et comportant un ensemble émetteur (61) émettant les rayons (63), un ensemble récepteur (62) recevant les rayons (63) et un dispositif d'évaluation traitant leurs signaux de sortie, les rayons (63) étant guidés, lors du fonctionnement, en forme de grille ou d'éventail de manière à s'étendre dans au moins un plan correspondant à la hauteur d'empilage, de préférence un plan horizontal, l'ensemble émetteur (61) comportant plusieurs émetteurs et/ou l'ensemble récepteur (62) comporte plusieurs récepteurs, des émetteurs et des récepteurs associés les uns aux autres étant disposés sur des côtés différents de la chambre frigorifique (5) ou sur le même côté et les rayons (63) étant déviés entre les émetteurs et les récepteurs au moyen d'un ensemble réflecteur.

2. Meuble frigorifique selon l'une des revendications précédentes, **caractérisé en ce que** l'ensemble émetteur (61) et l'ensemble récepteur (62), sont disposés, éventuellement par leur mise en contact électrique et leur câblage, en une ou plusieurs bandes (70).

3. Meuble frigorifique selon l'une des revendications précédentes, **caractérisé en ce que** le dispositif d'évaluation comporte un dispositif de détection permettant de détecter une influence due au temps et relativement faible sur les signaux de sortie, laquelle influence est induite par une intrusion dans la chambre frigorifique (5) et/ou par un objet étranger, tel qu'une étiquette de prix, dans la chambre frigorifique (5).

4. Meuble frigorifique selon l'une des revendications précédentes, **caractérisé en ce que** le dispositif de surveillance (60) comporte un dispositif d'affichage optique et/ou acoustique commandé électriquement.

5. Meuble frigorifique selon l'une des revendications précédentes, **caractérisé en ce que** le dispositif d'évaluation est disposé dans un dispositif de commande du meuble frigorifique ou à l'extérieur de celui-ci.
